# EUROPÄISCHE PATENTSCHRIFT

(11) **EP 2 993 415 B1**
(45) Veröffentlichungstag und Bekanntmachung des Hinweises auf die Patenterteilung: **15.07.2020**
(21) Anmeldenummer: 15182047.9
(22) Anmeldetag: 21.08.2015
(51) Int. Cl.: F24C 15/16, A47J 37/06, H05B 6/64

(54) **GARGUTTRÄGER MIT EINEM IDENTIFIKATIONSMITTEL**
COOKED PRODUCT CARRIER WITH AN IDENTIFICATION MEANS
SUPPORT DE PRODUIT DE CUISSON DOTÉ D'UN MOYEN D'IDENTIFICATION

(30) Priorität: 03.09.2014 DE 102014217629
(43) Veröffentlichungstag der Anmeldung: 09.03.2016
(73) Patentinhaber: BSH Hausgeräte GmbH, 81739 München (DE)
(72) Erfinder: Bally, Ingo, 83278 Traunstein (DE); Kabatas, Ramazan, 83301 Traunreut (DE)

(56) Entgegenhaltungen:
- EP-A1- 0 502 894
- EP-A1- 0 943 817
- WO-A1-01/17409
- WO-A1-2008/091760
- WO-A1-2013/189501
- CN-A- 1 379 978
- CN-A- 1 766 423
- DE-A1-102010 029 197
- DE-A1-102010 064 198
- DE-U1- 20 303 378
- DE-U1- 29 802 486
- DE-U1-202013 102 531
- DE-U1-202014 002 257
- IE-B2- S86 331
- JP-A- 2002 127 691
- JP-A- 2007 316 494
- TW-A- 201 318 887
- US-A1- 2003 106 473

## Beschreibung

Die Erfindung betrifft einen Gargutträger nach dem Oberbegriff des Anspruchs 1.

Herkömmliche Gargutträger, zur Aufnahme eines Garguts im Backofen, bestehen im Wesentlichen aus einem Auflageelement, welches das Gargut trägt und einem das Auflageelement rahmenartig umgebendes Rahmenelement, welches das Auflageelement trägt und in Relation zum Garraum positioniert.

Zudem ist bekannt, dass spezifische Betriebsarten, wie z. B. Mikrowellen-, Pyrolyse oder Dampfbetrieb, spezifische Gargutträger benötigen. So muss beispielsweise eine Geometrie der Gargutträger, insbesondere für Roste bei Mikrowellenbacköfen derart auf eine Mikrowellenverteilung abgestimmt sein, dass es zu keiner örtlichen Erhitzung oder Funkenüberschlag im Backofen kommt, was mit Standard-Rosten nicht gewährleistet ist. Da in einem Haushalt unterschiedliche Gargeräte, z. B. ein Standard-Backofen und ein Mikrowellenbackofen, vorhanden sein können, muss sichergestellt werden, dass die Roste nicht verwechselt werden. Insbesondere der Standard-Rost darf nicht im Mikrowellenbackofen verwendet werden. Dazu ist eine eindeutige Kennzeichnung des Mikrowellen-Rostes erforderlich. Ähnliches gilt bei Rosten oder Backblechen für Dampfbacköfen.

Das Dokument DE 20 2014 002 257 U1 beschreibt einen Grillrost mit als Grillgutauflagefläche ausbildenden Grillroststäben, wobei die Grillgutauflagefläche eine Grillgutauflageseite aufweist, wobei einzelne Grillroststäbe wenigstens abschnittsweise von einer allgemeinen Grundausrichtung der Grillroststäbe abweichend angeordnet sind.Dabei ist ein Brandeisen aus einem oder mehreren Grillroststäben zusammengesetzt, wobei die einzelnen Teilabschnitte des Brandeisens jeweils zu Buchstabenfolgen zusammengesetzt sind.

Zudem zeigt das Dokument DE 10 2010 029 197 A1 ein Gargerät, bei welchem in einer Garraumwand ein Fenster angeordnet ist. Durch das Fenster hindurch kann ein Sensor eine nach Art eines Barcodes ausgebildete, bitartige Kodierung eines Zubehörteils wie eines Backblechs oder Gitterrosts erfassen und so die Art des Zubehörteils erkennen.

Zudem zeigt das Dokument DE 203 03 378 U1 eine tragbare Feuerstelle mit einem Gehäuse, wobei das Gehäuse an einer Oberseite eine ebene Wärmefläche zum Erhitzen von auf die Wärmefläche positionierten Gegenständen aufweist, wobei ein Emblem in der Wärmefläche vorgesehen ist, welches durch eine plastische Hervorhebung aus der Oberflächenebene der Wärmefläche entsteht.

Zudem zeigt das Dokument WO 01/17409 A1 einen zusammenlegbaren Gasgrill mit einer Standeinheit und einer Umfangsschürze, an deren Oberfläche eine Aufnahmefläche für einen Grillrost und eine Grillplatte ausgebildet ist, wobei die Grillplatte ein Herstellerlogo aufweist.

Die Dokumente CN 1 766 423 A, EP 0 943 817 A1, und JP 2007 316494 A beschreiben den weiteren relevanten Stand der Technik.

Aufgabe der Erfindung ist es, bekannte Gargutträger zu verbessern. Eine mögliche Verbesserung ist die Zuordnung zwischen spezifischen Betriebsarten und spezifischen Gargutträgern sicherstellen zu können. Diese Aufgabe wird erfindungsgemäß durch die Merkmale des unabhängigen Patentanspruchs gelöst, während vorteilhafte Ausgestaltungen und Weiterbildungen der Erfindung den Unteransprüchen entnommen werden können.

Die Erfindung geht aus von einem Gargutträger, wobei der Gargutträger ein Rost ist, insbesondere für den Mikrowellenbetrieb eines Gargerätes, mit zumindest einem Auflageelement in Ausgestaltung eines Tragstabs, welches mittelbar oder unmittelbar an einem Rahmenelement in Ausgestaltung eines Rahmenstabs fixiert ist. Unter einem Gargutträger soll insbesondere ein in den Garraum des Gargeräts einschiebbares Element verstanden werden, welches geeignet ist, ein Gargut im Garraum zu positionieren und zu tragen. Der Gargutträger ist als Rost ausgeführt. Unter einem Auflageelement soll insbesondere der Bereich verstanden werden, welcher das Gargut trägt. Das Auflageelement ist dabei mittelbar oder unmittelbar an einem Rahmenelement fixiert, wobei unter einem Rahmenelement, der als den Tragstab rahmenartig umgebendes Element verstanden werden soll, welches geeignet ist, in garraumseitige Halteabschnitte, wie z. B. Rippen in der Seitenwand, einzugreifen und somit den Gargutträger in seiner Einschubhöhe zu haltern. Das Auflageelement kann dabei direkt am Rahmenelement ansetzen oder unmittelbar, also über ein dazwischen angebrachtes Verbindungselement am Rahmenelement fixiert sein.

Es wird vorgeschlagen, dass das Auflageelement und/oder das Rahmenelement und/oder das Verbindungselement zumindest einen Kennzeichnungsabschnitt aufweist, auf dem eine Kennzeichnung aufgebracht ist. Unter einem Kennzeichnungsabschnitt soll insbesondere ein Bereich oder Abschnitt verstanden werden, welcher geeignet ist, eine Kennzeichnung aufzunehmen bzw. darzustellen, welche zur eindeutigen Identifikation des Gargutträgers und/oder Zuordnung des Gargutträgers zu einer bestimmten Betriebsart geeignet ist.

Dabei weist der Kennzeichnungsabschnitt eine Prägung auf. Diese Prägung ist flach und/oder flächig ausgebildet. Eine besonders einfache Prägung ist in das Auflageelement und/oder Rahmenelement mittels einer Quetschung eingebracht. Vorteilhaft an dieser Ausgestaltung ist, dass eine Kennzeichnung besser auf einer flachen Abschnittsfläche anzubringen, zu lesen und zu reinigen ist.

Aus den runden Stäben entsteht mittels der Quetschung ein im Wesentlichen flächig ausgebildeter Abschnitt, der geeignet ist, die Kennzeichnung zu tragen.

Die Kennzeichnung ist eine Aneinanderreihung und/oder Mischung aus Buchstaben, Zahlen, Symbolen oder Logos. Eine besonders gute Kennzeichnung entsteht, wenn diese eine Beschriftung, also eine Aneinanderreihung von Buchstaben ist, welche in ihrer Zusammensetzung das Wort zum Ausdruck bringt, für welchen Zweck der Gargutträger definiert und konstruiert wurde, mögliche Worte sind demnach Mikrowelle, Dampf, Pyrolyse oder weitere Betriebsarten, sowie deren Übersetzungen, insbesondere in die englische Sprache.

Vorzugsweise ist die Kennzeichnung in den Kennzeichnungsabschnitt eingeprägt. Ein besonders einfacher Herstellungsprozess entsteht, wenn die Prägung der Kennzeichnung im gleichen Herstellungsprozessschritt, wie die Prägung des Kennzeichnungsabschnitts eingebracht wird. Vorteilhaft an dieser Ausgestaltung ist, dass separate Arbeitsschritte eingespart werden können.

Gemäß einer Ausgestaltung des Gargutträgers ist die Kennzeichnung auf den Kennzeichnungsabschnitt aufgebracht, wobei darunter insbesondere das Auftragen, z. B. mittels Bedruckung, oder Abtragen, z. B. mittels Lasern, Gravieren usw., gemeint ist. Dieses aufgebrachte Verfahren ist gegenüber einer Prägung besonders einfach, individuell, flexibel und/oder farbig zu gestalten.

Vorzugsweise weist der Tragstab und/oder der Rahmenstab eine Beschichtung und/oder eine Oberflächenveredelung auf. Diese Oberflächenveredelung kann sowohl vor als auch nach der Kennzeichnung auf dem Kennzeichnungsabschnitt aufgebracht werden und schützt den Gargutträger, z. B. vor Korrosion oder Anlauffarben durch Hitzebeanspruchung oder vor Abrieb.

Vorzugsweise ist der Gargutträger ein Rost, wobei der Tragstab mittels einem Verbindungsstab des Verbindungselements an den Rahmenstab angebracht ist. Ein Gargutträger nach diesem bevorzugten Ausführungsbeispiel besteht im Wesentlichen aus metallischen Drahtstäben, welche mittels Schweißungen aneinander angeordnet sind wobei die Stäbe unterschiedliche Durchmesser sowie Biegungen aufweisen können. Vorzugsweise ist die Kennzeichnung auf den Tragstab und/oder den Rahmenstab, vorzugsweise mittels der prägenden Quetschung aufgebracht. Dass sich durch den Präge- und/oder Quetschverarbeitungsschritt verdrängende Material erzeugt einen Querschnitt, der im Wesentlichen rechteckig ausgebildet ist, wobei vorzugsweise die Höhe geringer ist als der ansonsten rund ausgebildete Stab und eine Breite, vorzugsweise breiter ausgebildet ist, als der Durchmesser des Stabs.

Weitere Merkmale der Erfindung ergeben sich aus den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, wie durch den Schutzumfang der Ansprüche definiert. Es sind somit auch Ausführungsbeispiele von der Erfindung als umfasst und offenbart anzusehen, die in den schematischen Figuren nicht explizit gezeigt und erläutert sind, jedoch durch separierte Merkmalskombinationen aus den erläuterten Ausführungen hervorgehen und erzeugbar sind. Dabei zeigt:

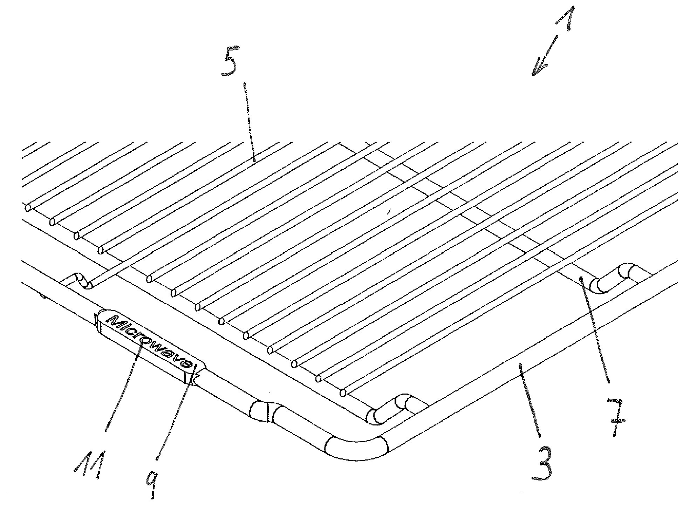

- Fig. 1: eine schematische perspektivische Darstellung eines Ausführungsbeispiels eines erfindungsgemäßen Gargutträgers.
In einem nicht näher dargestellten Gargerät, zum Zubereiten von Lebensmitteln, in der Ausgestaltung eines Backofens, ist ein Garraum vorgesehen, der durch Seitenwände des Backofens begrenzt ist. Frontseitig weist der Garraum eine Beschickungsöffnung auf, die durch eine Türe verschließbar ist. An den Seitenwänden befinden sich Gargutträgeraufnahmen, die geeignet sind, Gargutträger, wie z. B. Roste, Backbleche oder ähnliches Zubehör aufzunehmen. Die Gargutträgeraufnahmen weisen dabei unterschiedliche Einschubhöhen auf, die den Gargutträger auf unterschiedlichen Höhenniveaus im Garraum haltern.

Fig. 1 zeigt den erfindungsgemäßen Gargutträger 1. Der Gargutträger 1 besteht im Wesentlichen aus Rahmenstäben 3, welche das Rahmenelement bilden, aus Tragstäben 5, welche das Auflageelement bilden, sowie Verbindungsstäbe 7, welche das Verbindungselement bilden. Diese Stäbe 3, 5, 7 bestehen aus einem runden Metalldraht und werden mittels Schweißverfahren zueinander positioniert und fixiert. In Abhängigkeit der Verwendung des Gargutträgers wird dieser spezifisch auf diese Verwendung hin angepasst. Im vorliegenden Ausführungsbeispiel handelt sich um einen Gargutträger, der für den Mikrowellenbetrieb vorgesehen ist. Gargutträger für Mikrowellen-Backöfen bedürfen einer Geometrie, die ein Einkuppeln der Mikrowellenstrahlung verhindert und somit örtliche Erhitzungen sowie Funkenüberschläge im Backofen verhindert. Damit der Benutzer des Mikrowellen-Backofens nicht versehentlich ein Standard-Rost im Mikrowellenbetrieb verwendet und somit den Mikrowellen-Backofen schädigen würde, ist der Gargutträger in Form eines Mikrowellenrostes zu kennzeichnen. Diese Kennzeichnung erfolgt über erfindungsgemäße Kennzeichnungsabschnitte, welche im vorliegenden Ausführungsbeispiel in den Rahmenstab 3 des Rahmenelements einprägt ist. Der ca. 5 cm lange Kennzeichnungsabschnitt 9 ist mittels einem Prägeverfahren, bei dem zwei Stempel auf den rund 4 mm dicken Rahmenstab 3 pressen, hergestellt. Durch den Prägevorgang und die damit verbundene Verdrängung des Materials bildet den Kennzeichnungsabschnitt 9 aus. Auf dieser sich im Wesentlichen eben erstreckenden Fläche ist eine Kennzeichnung 11 eingebracht. Diese wird mittels eines Prägeverfahrens auf dem Kennzeichnungsabschnitt 9 gestanzt. Dazu weist der Prägestempel zur Herstellung des Kennzeichnungsabschnitts 9 erhabene Buchstaben auf, die im vorliegenden Ausführungsbeispiel "microwave" als Kennzeichnung 11 in den Kennzeichnungsabschnitt 9 einprägen. Diese Kennzeichnung 11 stellt ein eindeutiges Identifikationsmittel des Gargutträgers 1 dar, der es dem Benutzer ermöglicht, diesen Gargutträger von anderen Gargutträgern mit anderen geometrischen Eigenschaften schnell und eindeutig zu unterscheiden.

### BEZUGSZEICHENLISTE

- 1: Gargutträger
- 3: Rahmenstab
- 5: Tragstab
- 7 .: Verbindungsstab
- 9: Kennzeichnungsabschnitt
- 11: Kennzeichnung

## Patentansprüche

1. Gargutträger, wobei der Gargutträger (1) ein Rost ist, insbesondere für Mikrowellenbetrieb, mit mindestens einem Tragstab (5) für Gargut, welcher Tragstab (5) mittelbar oder unmittelbar an einem Rahmenstab (3) des Gargutträgers (1) fixiert ist, wobei der Rahmenstab (3) als den Tragstab (5) rahmenartig umgebendes Element ausgebildet ist, welches geeignet ist, in garraumseitige Halteabschnitte einzugreifen und somit den Gargutträger in einer Einschubhöhe zu haltern, wobei der Tragstab (5) und/oder der Rahmenstab (3) zumindest einen Kennzeichnungsabschnitt (9) aufweist und der Kennzeichnungsabschnitt aus dem Tragstab (5) selbst und/oder aus dem Rahmenstab (3) selbst ausgebildet ist, und wobei der Kennzeichnungsabschnitt (9) eine Kennzeichnung (11) aufweist, und wobei die Kennzeichnung (11) eine Aneinanderreihung und/oder Mischung aus Buchstaben, Zahlen, Symbolen oder Logos ist, **dadurch gekennzeichnet, dass** der Kennzeichnungsabschnitt (9) eine mittels einer Quetschung in den Tragstab (5) und/oder den Rahmenstab (3) eingebrachte Prägung aufweist, welche flach und/oder flächig ausgebildet ist, wobei bei der Quetschung aus einem runden Stab ein im Wesentlichen flächig ausgebildeter Abschnitt entsteht, der geeignet ist, die Kennzeichnung (11) zu tragen.

2. Gargutträger nach Anspruch 1, **dadurch gekennzeichnet, dass** die Kennzeichnung (11) eine Beschriftung ist.

3. Gargutträger nach einem der vorangegangenen Ansprüche, **dadurch gekennzeichnet, dass** die Kennzeichnung (11) in den Kennzeichnungsabschnitt (9) eingeprägt ist, vorzugsweise im gleichen Herstellungsprozessschritt wie das Prägen des Kennzeichnungsabschnitts (9).

4. Gargutträger nach einem der Ansprüche 1 bis 3, **dadurch gekennzeichnet, dass** die Kennzeichnung (11) in einem von einer Prägung separaten Arbeitsschritt auf den Kennzeichnungsabschnitt (9) aufgebracht ist.

5. Gargutträger nach einem der vorangegangenen Ansprüche, **dadurch gekennzeichnet, dass** der Tragstab (5) und/oder der Rahmenstab (3) eine Beschichtung und/oder eine Oberflächenveredelung aufweist.

6. Gargutträger nach einem der vorangegangenen Ansprüche, **dadurch gekennzeichnet, dass** der Tragstab (5) mittels einem Verbindungsstab (7) an den Rahmenstab (3) angebracht ist.

7. Gargutträger nach einem der vorangegangenen Ansprüche, **dadurch gekennzeichnet, dass** die Kennzeichnung (11) auf den Tragstab (5) und/oder den Rahmenstab (3) aufgebracht ist.

## Claims

1. Carrier of a product to be cooked, wherein the carrier of a product to be cooked (1) is a wire rack, in particular for microwave operation, with at least one carrier bar (5) for products to be cooked, which carrier bar (5) is indirectly or directly fixed to a frame bar (3) of the carrier of a product to be cooked (1), wherein the frame bar (3) is embodied as an element which surrounds the carrier bar (5) in a frame-like manner and is suitable for engaging into cooking compartment-side retaining sections and thus for retaining the carrier of a product to be cooked in an insertion height, wherein the carrier bar (5) and/or the frame bar (3) has at least one marking section (9) and the marking section is embodied from the carrier bar (5) itself and/or from the frame bar (3) itself, and wherein the marking section (9) has a marking (11), and wherein the marking (11) is a succession and/or mixture of letters, numbers, symbols or logos, **characterised in that** the marking section (9) has a shaped area which is introduced into the carrier bar (5) and/or the frame bar (3) by means of a crimping and is embodied in a flat and/or two-dimensional manner, wherein by means of the crimping, a section is produced from a round bar, which section is embodied to be substantially two-dimensional and is suitable for carrying the marking (11).

2. Carrier of a product to be cooked according to claim 1, **characterised in that** the marking (11) is a label.

3. Carrier of a product to be cooked according to one of the preceding claims, **characterised in that** the marking (11) is imprinted into the marking section (9), preferably in the same manufacturing process step as the shaping of the marking section (9).

4. Carrier of a product to be cooked according to one of claims 1 to 3, **characterised in that** the marking (11) is applied to the marking section (9) in a separate work step from a shaping.

5. Carrier of a product to be cooked according to one of the preceding claims, **characterised in that** the carrier bar (5) and/or the frame bar (3) have a coating and/or a surface finishing.

6. Carrier of a product to be cooked according to one of the preceding claims, **characterised in that** the carrier bar (5) is attached to the frame bar (3) by means of a connection bar (7).

7. Carrier of a product to be cooked according to one of the preceding claims, **characterised in that** the marking (11) is applied to the carrier bar (5) and/or the frame bar (3).

## Revendications

1. Support d'aliment à cuire, dans lequel le support d'aliment à cuire (1) est une grille, destinée en particulier à un fonctionnement par micro-ondes, muni d'au moins une tige de support (5) pour l'aliment à cuire, laquelle tige de support (5) est fixée indirectement ou directement sur la tige de cadre (3) du support d'aliment à cuire (1), la tige de cadre (3) étant réalisée comme un élément entourant comme un cadre la tige de support (5), lequel convient pour pénétrer dans des parties de maintien côté espace de cuisson et pour ainsi maintenir le support pour aliment à cuire dans une hauteur d'enfournement, la tige de support (5) et/ou la tige de cadre (3) comprenant au moins une partie signalétique (9) et la partie signalétique étant constituée de la tige de support (5) elle-même et/ou de la tige de cadre (3) elle-même, et la partie signalétique (9) comprenant une caractérisation (11), et la caractérisation (11) étant une suite et/ou un mélange de lettres, de nombres, de symboles ou des logos, **caractérisé en ce que** la partie signalétique (9) comprend une marque introduite au moyen d'une empreinte dans la tige de support (5) et/ou dans la tige de cadre (3), laquelle est réalisée plate et/ou aplatie, dans lequel, lors de l'impression, on obtient d'une tige ronde, une partie réalisée essentiellement aplatie, laquelle convient pour supporter la caractérisation (11).

2. Support d'aliment à cuire selon la revendication 1, **caractérisé en ce que** la caractérisation (11) est une inscription.

3. Support d'aliment à cuire selon l'une des revendications précédentes, **caractérisé en ce que** la caractérisation (11) est imprimée dans la partie signalétique (9), de préférence à la même étape de processus de fabrication que le marquage de la partie signalétique (9).

4. Support d'aliment à cuire selon l'une des revendications 1 à 3, **caractérisé en ce que** la caractérisation (11) est effectuée dans une étape de travail séparée de l'impression sur la partie signalétique (9).

5. Support d'aliment à cuire selon l'une des revendications précédentes, **caractérisé en ce que** la tige de support (5) et/ou la tige de cadre (3) comprend un revêtement et/ou un traitement de la surface.

6. Support d'aliment à cuire selon l'une des revendications précédentes, **caractérisé en ce que** la tige de support (5) est amenée sur la tige de cadre (3) au moyen d'une tige de raccord (7).

7. Support d'aliment à cuire selon l'une des revendications précédentes, **caractérisé en ce que** la caractérisation (11) est effectuée sur la tige de support (5) et/ou la tige de cadre (3).
